# EUROPEAN PATENT SPECIFICATION

(11) **EP 1 089 492 B1**
(45) Date of publication and mention of the grant of the patent: **14.03.2007**
(21) Application number: 00308651.9
(22) Date of filing: 02.10.2000
(51) Int. Cl.: H04L 12/24

(54) **Method and apparatus for detecting operations of devices**
Vorrichtung und Verfahren zum Ermitteln der Funktion von Geräten
Procédé et dispositif pour détecter les fonctionnements d' appareils

(30) Priority: 02.10.1999 KR 9942506
(43) Date of publication of application: 04.04.2001
(73) Proprietor: SAMSUNG ELECTRONICS CO., LTD., Suwon-City, Kyungki-do (KR)
(72) Inventor: Lee, Jin-woo, Seoul (KR)
(74) Representative: Robinson, Ian Michael

(56) References cited:
- US-A- 4 680 753
- US-A- 5 926 463
- MOGHE P ET AL: "RAP-rate adaptive polling for network management applications" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15 February 1998 (1998-02-15), pages 395-399, XP010267413 ISBN: 0-7803-4351-4

## Description

The present invention relates to a data communications apparatus and a data communications method, and more particularly, to an apparatus for detecting the operations of devices, and a method used by the apparatus.

In Internet communications where various devices are connected to a server, the Internet communications are confused by devices which operate abnormally. Namely, if devices that operate abnormally are not deleted from the device management list of a directory server, a wrong list is shown to a user, thus confusing a user who wants to use the devices.

US-A-4680753 discloses a control system having a network of distributed programmable controllers connected together through a communications link. An active monitor maintains the network as a part of its normal operation. The active monitor polls each node address on a cyclical basis for the purpose of adding and removing nodes. A node which is removed from the network is deleted from an active list when it fails to respond to a poll. This document forms the pre-characterising portion of the independent claims appended hereto.

An aim of the present invention to provide an apparatus for detecting the operation of devices. It is another aim of the present invention to provide a method by which the operations of devices are detected.

According to the present invention there is provided an apparatus as set forth in claim 1 appended hereto. Also according to the present invention there is provided a method as set forth in claim 2 appended hereto.

In one aspect of the present invention there is provided an apparatus for detecting whether devices connected to a directory server operate normally or abnormally, the apparatus comprising: a plurality of devices; a directory daemon for receiving alive check data from the devices at predetermined intervals; the directory server having a management list of the devices, updating device alive check data time of the directory daemon, deleting the devices which have not transmitted the alive check data for a predetermined time from the management list by a sweep command of the directory daemon, and providing information on the deletion to undeleted devices; and a web server for providing communication with the devices; characterised by the web server transmitting the result of the deletion of the devices of the directory server to the devices.

In another aspect of the invention there is provided a method for deleting the operations of devices using a directory server in a communication apparatus comprising a plurality of devices, a directory daemon for monitoring the devices, a directory server, and a web server, the method comprising the steps of: (a) transmitting alive check data from the devices to the directory daemon at predetermined intervals; (b) transmitting the result obtained by receiving the alive check data from the directory daemon to the directory server; (c) transmitting a device management command from the directory daemon to the directory server at predetermined intervals; and (d) at the directory server deleting the devices which have not transmitted the alive check data for a predetermined time from a management list and transmitting information on the deletion to the undeleted devices, according to the management command.

For a better understanding of the invention, and to show how embodiments of the same may be carried into effect, reference will now be made, by way of example, to the accompanying diagrammatic drawings in which:
Figure 1 is a block diagram for showing the structure of an apparatus in which the operations of devices are detected using a directory server; and
Figure 2 is a flowchart for showing the operation of a method for which the operations of devices are detected using a directory server.

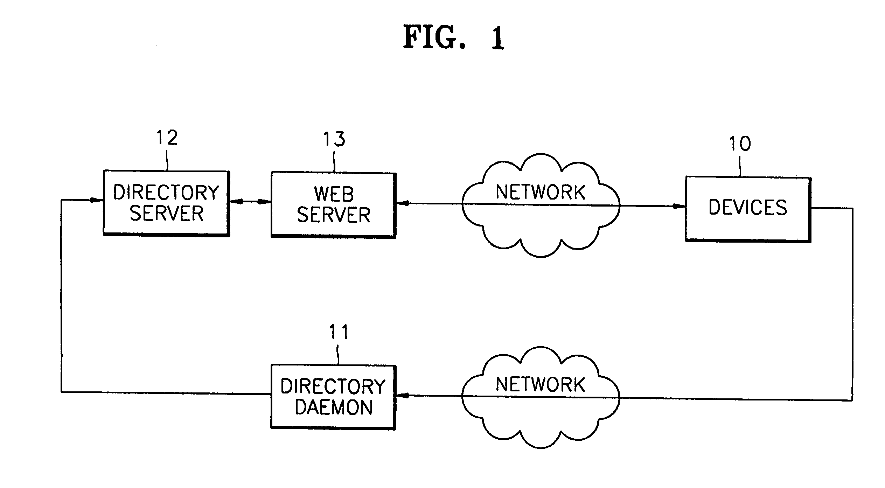

Figure 1 is a block diagram for showing the structure of an apparatus for detecting the operations of devices using a directory server according to a preferred embodiment of the present invention.

The apparatus shown in Figure 1 includes a plurality of devices 10, a directory daemon 11, which is continuously executed on a server, for receiving alive check data from the devices 10 at uniform intervals, a directory server 12 for updating the device's 10 alive check data time of the directory daemon 11 and deleting from a device management list devices that do not transmit the alive check data in response to a sweep command of the directory daemon 11, and a web server 13 for performing communications with the devices and providing the device deletion result of the directory server 12 to the devices.

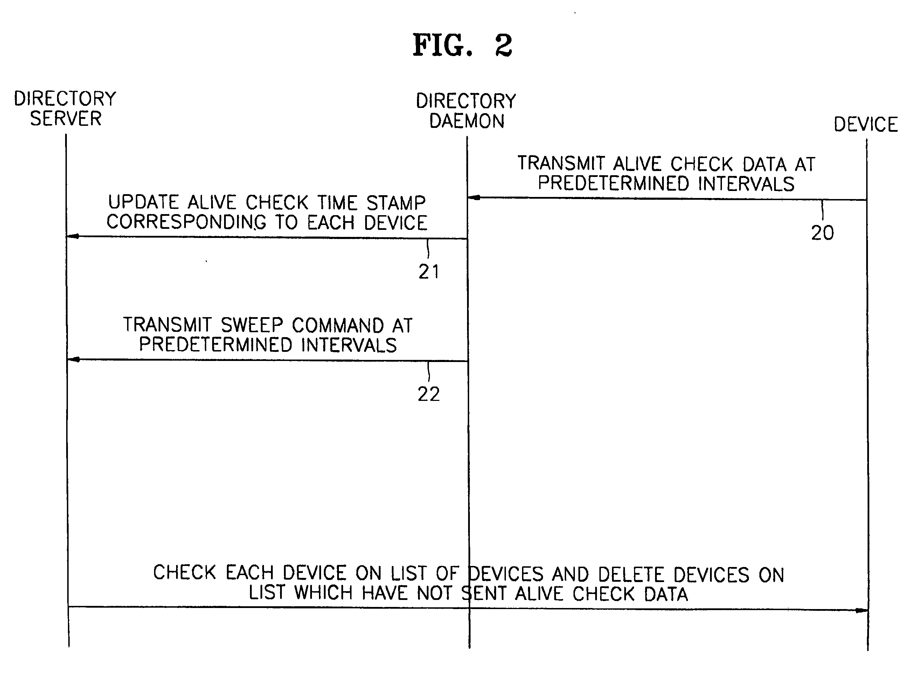

Figure 2 is a flowchart for showing the operation of a method used by an apparatus according to a preferred embodiment of the present invention, in which the operations of devices are detected in a directory.

The flowchart shown in Figure 2 includes steps of transmitting alive check data at uniform intervals from a device to the directory daemon 11 (step 20), the directory daemon updating an alive check time stamp corresponding to each device to the directory server (step 21), the directory daemon transmitting a sweep command to the directory server at uniform intervals (step 22), the directory server checking each device on a list through the web server, deleting from the list devices that have not transmitted the alive check data for a certain time, and transmitting the deleted devices to the devices 10 (step 23).

The present invention will be described in detail with reference to Figures 1 and 2.

The devices 10 start or terminate the Internet communications by logging on and off the web server 13.

The devices 10 transmit the alive check data to the directory daemon 11 through a network at uniform intervals (step 20). The directory daemon 11 is continuously executed on the server and monitors whether the devices 10 are operating normally by the alive check data.

The directory daemon 11 transmits the alive check data to the directory server 12 and updates the alive check time stamp corresponding to the devices 10 (step 21). The directory daemon 11 receives the alive check data transmitted from the devices 10 at uniform intervals and transmits the result to the directory server 12. The directory server 12 continuously receives the result indicating whether the devices 10 operate normally from the directory daemon 11 at uniform intervals and updates the result.

The directory daemon 11 transmits the sweep command to the directory server 12 at uniform intervals (step 22). When the sweep command is transmitted to the directory server 12, the device's 10 operation list, which has been updated at predetermined intervals, is checked.

The directory server 11 checks the device's 10 list through the web server 13, deletes the devices 10 which have not transmitted the alive check data for a certain time from the management list of the directory server 12, and transmits the list of the devices deleted to each of the devices which are not deleted (step 23). Therefore, it is possible to know whether the devices 10 are operating normally.

While this invention has been particularly shown and described with reference to preferred embodiments thereof, it will be understood by those skilled in the art that various changes in form and details may be made therein without departing from the scope of the invention as defined by the appended claims.

Advantageously, only a list of currently normal devices is shown to a user by deleting abnormal devices from the management list of the directory server when devices become abnormal. Therefore, it is possible to check whether devices are operating normally, to thus let the user conveniently use the devices.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. An apparatus for detecting whether devices (10) connected to a directory server operate normally or abnormally, the apparatus comprising:
a plurality of devices (10);
a directory daemon (11) for receiving alive check data from the devices (10) at predetermined intervals;
the directory server (12) having a management list of the devices, updating device alive check data time of the directory daemon (11), deleting the devices (11) which have not transmitted the alive check data for a predetermined time from the management list by a sweep command of the directory daemon (11),
**characterised by** transmitting a list of the deleted devices of the directory server (12) to the devices (10).

2. A method for deleting the operations of devices using a directory server in a communication apparatus comprising a plurality of devices (10), a directory daemon (11) for monitoring the devices, a directory server (12), and a web server (13), the method comprising the steps of:
(a) transmitting alive check data from the devices (10) to the directory daemon (11) at predetermined intervals;
(b) transmitting the result obtained by receiving the alive check data from the directory daemon (11) to the directory server (12);
(c) transmitting a device management command from the directory daemon (11) to the directory server (12) at predetermined intervals; and
(d) at the directory server (12) deleting the devices (10) which have not transmitted the alive check data for a predetermined time from a management list and transmitting a list of the deleted devices to the undeleted devices (10), according to the management command.

## Patentansprüche

1. Vorrichtung, die erfasst, ob Einrichtungen (10), die mit einem Verzeichnis-Server verbunden sind, normal oder abnormal arbeiten, wobei die Vorrichtung umfasst:
eine Vielzahl von Einrichtungen (10);
einen Verzeichnis-Daemon (11) zum Empfangen von Alive-Check-Daten von den Einrichtungen (10) in vorgegebenen Intervallen;
wobei der Verzeichnis-Server (12) eine Verwaltungsliste der Einrichtungen hat, Alive-Check-Daten-Zeit der Einrichtungen des Verzeichnis-Daemon (11) aktualisiert und die Einrichtungen (11), die die Alive-Check-Daten über eine vorgegebene Zeit nicht gesendet haben, durch einen Räumbefehl des Verzeichnis-Daemon (11) löscht,
**gekennzeichnet durch** Senden einer Liste der gelöschten Einrichtungen des Verzeichnis-Servers (12) zu den Einrichtungen (10).

2. Verfahren zum Löschen der Operationen von Einrichtungen unter Verwendung eines Verzeichnis-Servers in einer Kommunikationsvorrichtung, die eine Vielzahl von Einrichtungen (10), einen Verzeichnis-Daemon (11) zum Überwachen der Einrichtungen, einen Verzeichnis-Server (12) und einen Web-Server (13) umfasst, wobei das Verfahren die folgenden Schritte umfasst:
(a) Senden von Alive-Check-Daten von den Einrichtungen (10) zu dem Verzeichnis-Daemon (11) in vorgegebenen Intervallen;
(b) Senden des durch Empfangen der Alive-Check-Daten ermittelten Ergebnisses von dem Verzeichnis-Daemon (11) zu dem Verzeichnis-Server (12);
(c) Senden eines Einrichtungs-Verwaltungsbefehls von dem Verzeichnis-Daemon (11) zu dem Verzeichnis-Server (12) in vorgegebenen Intervallen; und
(d) Löschen der Einrichtungen (10), die die Alive-Check-Daten über eine vorgegebene Zeit nicht gesendet haben, aus einer Verwaltungsliste an dem Verzeichnis-Server (12) und Senden einer Liste der gelöschten Einrichtungen zu den nicht gelöschten Einrichtungen (10) entsprechend dem Verwaltungsbefehl.

## Revendications

1. Dispositif pour détecter si des appareils (10) connectés à un serveur de répertoires fonctionnent normalement ou anormalement, le dispositif comprenant :
une pluralité d'appareils (10) ;
un démon de répertoires (11) pour recevoir des données de vérification en direct des appareils (10) à intervalles prédéterminés ;
le serveur de répertoires (12) comprenant une liste de gestion des appareils, mettant à jour des heures de données de vérification en direct d'appareil du démon de répertoires (11), supprimant les appareils (10) qui n'ont pas transmis les données de vérification en direct pendant une durée prédéterminée de la liste de gestion des appareils à l'aide d'une commande de balayage du démon de répertoires (11), **caractérisé par** la transmission d'une liste d'appareils supprimés du serveur de répertoires (12) aux appareils (10).

2. Procédé pour supprimer les fonctionnements d'appareils à l'aide d'un serveur de répertoires dans un dispositif de communication comprenant une pluralité d'appareils (10), un démon de répertoires (11) pour contrôler les appareils, un serveur de répertoires (12), et un serveur Web (13), le procédé comprenant les étapes consistant à :
(a) transmettre des données de vérification en direct des appareils (10) au démon de répertoires (11) à intervalles prédéterminés ;
(b) transmettre le résultat obtenu par la réception des données de vérification en direct du démon de répertoires (11) au serveur de répertoires (12) ;
(c) transmettre une commande de gestion des appareils du démon de répertoires (11) au serveur de répertoires (12) à intervalles prédéterminés ; et
(d) au niveau du serveur de répertoires (12), supprimer les appareils (10) qui n'ont pas transmis les données de vérification en direct sur une période prédéterminée d'une liste de gestion et transmettre une liste des appareils supprimés aux appareils (10) non supprimés, en fonction de la commande de gestion.
